(19)

Europäisches
Patentamt

European
Patent Office

Office européen
des brevets

(11) **EP 4 632 825 A1**

(12) **EUROPEAN PATENT APPLICATION**

(43) Date of publication:
**15.10.2025 Bulletin 2025/42**

(21) Application number: **24204648.0**

(22) Date of filing: **04.10.2024**

(51) International Patent Classification (IPC):
*H01M 4/04* (2006.01)    *H01M 4/36* (2006.01)
*H01M 4/48* (2010.01)    *H01M 4/505* (2010.01)
*H01M 4/525* (2010.01)    *H01M 4/62* (2006.01)
*H01M 10/0525* (2010.01)    *H01M 4/02* (2006.01)

(52) Cooperative Patent Classification (CPC):
**H01M 4/364; H01M 4/0404; H01M 4/48;**
**H01M 4/505; H01M 4/525; H01M 4/625;**
**H01M 10/0525;** H01M 2004/021; H01M 2004/028;
Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **12.04.2024   CN 202410444177**

(71) Applicant: **Jiangsu Zenergy Battery Technologies**
**Group**
**Co., Ltd.**
**Suzhou City, Jiangsu 215500 (CN)**

(72) Inventors:
• CHEN, Jicheng
  Changshu Suzhou City, Jiangsu, 215500 (CN)
• YU, Zhexun
  Changshu Suzhou City, Jiangsu, 215500 (CN)
• YU, Hongjiang
  Changshu Suzhou City, Jiangsu, 215500 (CN)
• JIANG, Kecheng
  Changshu Suzhou City, Jiangsu, 215500 (CN)

(74) Representative: **Studio Torta S.p.A.**
  **Via Viotti, 9**
  **10121 Torino (IT)**

(54) **A POSITIVE ELECTRODE PLATE, A LITHIUM-ION BATTERY, AND AN ELECTRODE DEVICE**

(57)    The present disclosure provides a positive electrode, including a positive electrode current collector and a coating layer coated on at least one surface of the positive electrode current collector perpendicular to a thickness direction. The coating layer includes a positive electrode active material and a conductive agent, and the positive electrode active material includes a monocrystalline ternary material and a polycrystalline ternary material. The coating layer satisfies Formula I: $0.39 < 10^6 ab^2/c^2 < 2$; where in Formula I, a is a mass ratio of the monocrystalline ternary material in the positive electrode active material, b is a mass percentage content of the conductive agent in the coating layer, and c is an areal-density of the coating layer in $mg/cm^2$. In the present disclosure, when the positive electrode satisfies the Formula I, the lithium-ion battery prepared by the positive electrode could achieve an excellent DCR performance while ensuring energy density and cycle-life performance simultaneously.

**EP 4 632 825 A1**

**Description**

Technical Field

The present disclosure belongs to the field of lithium-ion battery technology, and specifically relates to a positive electrode plate, a lithium-ion battery, and an electrode device.

Background

With the development of modern society and the advance in science and technology, automobiles have gradually become the mainstream means of transportation. However, with the increase in the number of automobiles, traffic has become increasingly congested and vertical takeoff and landing equipment has gradually attracted people's attention. Also, the Electric Vertical Takeoff and Landing (EVTOL) equipment has become the target of technological pursuit due to the annual increase in oil prices. Currently, lithium ion batteries have become the best choice for EVTOL drivers. Due to the uniqueness of EVTOL, there is a demand for lithium ion batteries that balance high energy density, high power, and long lifespan. In view of the above, providing a lithium ion battery that maintains energy density and cycle-life performance while continuously providing large power output is an essential condition for promoting the development of the aircraft industry.

Summary

In view of this, the technical problem to be solved by the present disclosure is to provide a positive electrode plate and a lithium-ion battery. The lithium-ion battery prepared by the positive electrode plate provided by the present disclosure can achieve an excellent DCR performance while ensuring the energy density and cycle-life performance.

The present disclosure provides a positive electrode plate, the positive electrode plate includes a positive electrode current collector and a coating layer coated on at least one surface of the positive electrode current collector perpendicular to a thickness direction, where the coating layer includes a positive electrode active material and a conductive agent, the positive electrode active material includes a monocrystalline ternary material and a polycrystalline ternary material, the coating layer satisfies Formula I:

$$0.39 < 10^6 ab^2/c^2 < 2, \text{ Formula I};$$

where in Formula I, a is a mass ratio of the monocrystalline ternary material in the positive electrode active material, b is a mass percentage content of the conductive agent in the coating layer, and c is an areal-density of the coating layer in $mg/cm^2$.

In some embodiments, a value range of $10^6 ab^2/c^2$ is 0.59 to 1.41.

In some embodiments, $10\% \leq a \leq 50\%$, and preferably, $15\% \leq a \leq 35\%$.

In some embodiments, $2.5\% \leq b \leq 4\%$, and preferably, $2.6\% \leq b \leq 3.3\%$.

In some embodiments, $12mg/cm^2 \leq c \leq 18mg/cm^2$, and preferably, $14mg/cm^2 \leq c \leq 16mg/cm^2$.

In some embodiments, the positive electrode active material is selected from one or two of lithium nickel cobalt manganese oxide and lithium nickel cobalt aluminum oxide; and the positive electrode current collector is one of aluminum foil or carbon coated aluminum foil.

In some embodiments, a thickness of the coating layer is $65\mu m$ to $120\mu m$.

The present disclosure provides a lithium-ion battery, it includes a positive electrode plate, a negative electrode plate, a separator, and an electrolyte, where the positive electrode plate is selected from the positive electrode plate described above.

In some embodiments, the negative electrode plate includes a negative electrode current collector and a negative electrode coating layer coated on the negative electrode current collector, where the compaction density of the negative electrode coating layer is $1.3g/cm^3$ to $1.65g/cm^3$; and the negative electrode coating layer includes a negative electrode active material, which is selected from one or more of graphite, soft carbon, hard carbon, mesocarbon microbeads, and a silicon-based material.

The present disclosure provides an electrical device, including the lithium-ion battery mentioned above.

Compared with the prior art, the present disclosure provides a positive electrode plate, includes a positive electrode current collector and a coating layer coated on at least one surface of the positive electrode current collector perpendicular to a thickness direction. The coating layer includes a positive electrode active material and a conductive agent, and the positive electrode active material includes a monocrystalline ternary material and a polycrystalline ternary material. The coating layer satisfies Formula I: $0.39 < 10^6 ab2/c^2 < 2$, Formula I; where in the Formula I, a is a mass ratio of the monocrystalline ternary material in the positive electrode active material, b is a mass percentage content of the conductive agent in the coating layer, and c is an areal-density of the coating layer in mg/cm$^2$. In the present disclosure, when the positive electrode plate satisfies the Formula I, the lithium-ion battery prepared by the positive electrode plate can achieve an excellent DCR performance while ensuring the energy density and cycle-life performance.

Detailed Description of the Embodiments

The present disclosure provides a positive electrode plate, the positive electrode plate includes a positive electrode current collector and a coating layer coated on at least one surface of the positive electrode current collector perpendicular to a thickness direction, where the coating layer includes a positive electrode active material and a conductive agent, and the positive electrode active material includes a monocrystalline ternary material and a polycrystalline ternary material, the coating layer satisfies Formula I:

$$0.39 < 10^6 ab^2/c^2 < 2, \text{ Formula I};$$

where in the Formula I, a is a mass ratio of the monocrystalline ternary material in the positive electrode active material, b is a mass percentage content of the conductive agent in the coating layer, and c is an areal-density of the coating layer in mg/cm$^2$.

In some embodiments, $10\% \leq a \leq 50\%$; $2.5\% \leq b \leq 4\%$; $12 \text{mg/cm}^2 \leq c \leq 18 \text{mg/cm}^2$.

The positive electrode plate provided by the present disclosure includes a positive electrode current collector, and there is no special restrictions on the type of the positive electrode current collector in the present disclosure, and the type of current collector well-known to those skilled in the art can be selected, which is preferably aluminum foil or carbon coated aluminum foil.

The positive electrode plate provided by the present disclosure further includes a coating layer coated on the surface of the positive electrode current collector, where the coating layer includes a positive electrode active material and a conductive agent.

The coating layer satisfies Formula I:

$$0.39 < 10^6 ab^2/c^2 < 2, \text{ Formula I}$$

The mass ratio of the monocrystalline ternary material in the positive electrode active material, the areal-density of the coating layer, and the ratio of the conductive agent in the positive electrode coating layer of the positive electrode plate all have influences on the energy density and power performance of the battery cell. However, their influences have certain limitations and correlations. The inventors found that only when the positive electrode plate satisfied Formula I $0.39 < 10^6 ab2/c^2 < 2$, it can simultaneously exhibit a high energy density and cycle-life performance, as well as an excellent power performance, meanwhile it can also avoid a large number of DOE experiments, saving development time and costs of a battery.

In some embodiments, a value range of $10^6 ab^2/c^2$ is 0.59 to 1.41, for example, it can be any value of 0.59, 0.60, 0.70, 0.80, 0.90, 1.00, 1.10, 1.20, 1.30, 1.40, 1.41, or any value between 0.59 to 1.41.

Among them, a mass ratio of the monocrystalline ternary material in the positive electrode active material in the coating layer is 10% to 50%, and it can be any value of 10%, 15%, 20%, 25%, 30%, 35%, 40%, 45%, 50%, or any value between 10% to 50%, and 15% to 35% in some embodiments. Among them, the mass ratio of the monocrystalline ternary material is specifically a mass percentage of the monocrystalline ternary material in the positive electrode active material to the total mass of the positive electrode active material. The positive electrode active material includes a monocrystalline ternary material and a polycrystalline ternary material, where the monocrystalline ternary material is a material with a particle size of $2\mu$m to $6\mu$m formed from a monocrystal, while the polycrystalline ternary material is a secondary particle composed of primary particles with a particle size of 100nm to 300nm after agglomeration. The monocrystalline ternary material has a large particle size and a small contact area with the electrolyte, and the side reactions between the material and the electrolyte are relatively less, and the cycle performance of which is good, however, the lithium ions within the monocrystalline ternary material have long migration distance, and there are few active sites for electrochemical reactions, resulting in low power performance of monocrystalline ternary material. The primary particle size of the polycrystalline material has small particle size, large specific surface area, and multiple active sites for electrochemical reactions, the lithium ions have short transport distance within the monocrystalline ternary material, resulting in good power performance of the monocrystalline ternary material, however, multiple active sites also lead to increased side reactions, resulting in decreased cycle performance of the monocrystalline ternary material. Therefore, by controlling the ratio of the monocrystalline ternary material to the polycrystalline ternary material within a reasonable range, the battery can meet the requirements for both power and cycle performance.

A mass percentage content b of the conductive agent in the coating layer can range from 2.5% to 4%, for example, it can be 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, or any value between 2.5% to 4%, or 2.6% to 3.3% in some embodiments. Among them, the content of the conductive agent in the coating layer will directly affect the electronic impedance of the positive electrode plate and the energy density of the battery. As the ratio of conductive agent in the coating layer increases, the electronic impedance of the positive electrode plate decreases, which is conducive to improving the power performance of the battery. However, as the ratio of conductive agent increases, the ratio of positive electrode active material in the coating layer will correspondingly decrease, thereby affecting the energy density of the battery. In addition, the conductive agent in the positive electrode plate can improve the deteriorated conductivity caused by expansion and phase transformation during the cycle of the battery, thereby improving the cycle performance of the battery. If the content of the positive electrode conductive agent is too high, the electronic impedance would no longer be a limiting factor for power of battery. Further increasing the content of the conductive agent in the battery cannot significantly improve the power performance of the battery, but it would reduce the energy density of the battery. If the ratio of the conductive agent in the coating layer is too low, it is conducive to increasing the energy density of the battery, but the electronic impedance increases with the decrease in content of the conductive agent, which would affect the power performance of the battery. Therefore, by controlling the mass percentage of the conductive agent in the coating layer within a reasonable range, the battery can meet the requirements for power performance, cycle performance and energy density.

A value range for an areal-density c of the coating layer is 12 to 18 (in mg/cm$^2$), for example, it could be any value of 12, 13, 14, 14.5, 15, 15.5, 16, 17, 18, or any value between 12 to 18, and optionally 14 to 16 in some embodiments. Among them, when the lithium ion battery is discharged, the lithium ions move out of the negative electrode material and embed into the positive electrode active material, and the transport distance of lithium ions is related to the areal-density. As the areal-density increases, the ratio of auxiliary materials in the electrode plate decreases, the energy density of the battery increases, and the migration distance of lithium ions increases at the same time, resulting in a decrease in power performance, meanwhile the expansion of the electrode increases, leading to a decrease in the conductivity of the electrode and consequently a decrease in cycle performance. If the areal-density is too high, the transport distance of lithium ions would become a limiting factor for the high-rate discharge of the battery, and the power performance of the battery would rapidly decrease; and if the areal-density is too low, the power performance of the battery would be improved, however as the ratio of auxiliary materials in the battery increases, the energy density of the battery would decrease. Therefore, by controlling the areal-density of the coating layer within a reasonable range, the battery can meet the requirements for power performance, cycle performance and energy density.

Therefore, the mass ratio of the monocrystalline ternary material in the positive electrode active material, the ratio of conductive agent, and the areal-density in the coating layer of the positive electrode plate all have an impact on the energy density, cycle performance, and power performance of the battery. When the ratio of monocrystalline ternary material in the positive electrode active material is increased, there are fewer reaction active sites in the monocrystalline ternary material, the gram capacity is reduced, and the solid-state diffusion distance of lithium ions in the positive electrode active material is increased, thereby improving the cycle performance of the battery, but the power performance and energy density are reduced. When the content of conductive agent is increased to an appropriate range, the areal-density could be reduced, and the electronic conductivity of the electrode can be improved, meanwhile the liquid-phase transport distance of lithium ions in the electrolyte could be reduced, thereby improving the cycle performance and power performance of the battery. Therefore, the inventors discovered that by controlling the parameters of the three above to complement each other and by ensuring the coating layer meets the Formula I, lithium-ion batteries can balance energy density, cycle performance, and power performance simultaneously.

In the present disclosure, a thickness of the coating layer is 65μm to 120μm.

In the present disclosure, the positive electrode active material in the positive electrode plate is selected from one or two of lithium nickel cobalt manganese oxide and lithium nickel cobalt aluminum oxide.

The present disclosure also provides a preparation method for the positive electrode plate mentioned above, includes the following steps: mix a positive electrode active material, a conductive agent, and an auxiliary agent to obtain a slurry; coat the slurry on the surface of the current collector, dry same to obtain a positive electrode plate; where the coating layer of the positive electrode plate is made to satisfy Formula I:

$$0.39 < 10^6 ab^2/c^2 < 2, \text{ Formula I;}$$

where in Formula I, a is a mass ratio of the monocrystalline ternary material in the positive electrode active material, b is a mass percentage content of the conductive agent in the coating layer, and c is an areal-density of the coating layer in mg/cm$^2$.

Specifically, in the present disclosure, the positive electrode active material, the conductive agent and the auxiliary agent are mixed to obtain the slurry. Among them, the auxiliary agent is selected from an adhesive.

In the present disclosure, the positive electrode active material, the conductive agent, and the auxiliary agent are dispersed in a solvent, and stirred to form uniformly mixed and stable positive electrode slurry. In order to ensure the energy density and cycle-life performance while achieving an excellent DCR performance, it is necessary to control the mass ratio of the monocrystalline ternary material of the positive electrode active material in the coating layer, and the mass percentage content of the conductive agent in the coating layer to satisfy $10\% \leq a \leq 50\%$ and $2.5\% \leq b \leq 4\%$, respectively.

The positive electrode slurry is uniformly coated on the positive electrode current collector, then dried, and cold-pressed to obtain the positive electrode plate. Among them, the solvent is N-methylpyrrolidone (NMP) in some embodiments.

In the present disclosure, it is preferred to use a weighing instrument to monitor the areal-density of the coating in real time during coating, so that the areal-density of the obtained electrode satisfies the range of $12mg/cm^2$ to $18mg/cm^2$.

The positive electrode plate obtained and selected by the above method satisfies $0.39 < 10^6 ab2/c^2 < 2$, ensuring that the battery cell achieves higher energy density, cycle-life performance, and excellent power performance.

The present disclosure provides a lithium-ion battery, including a positive electrode plate, a negative electrode plate, a separator, and an electrolyte, where the positive electrode plate is selected from the positive electrode plate described above.

In the present disclosure, the preparation method of the lithium-ion battery includes the following steps: stack the positive electrode plate, the separator, the negative electrode plate, and the separator in sequence with the assembling method being either winding or stacking, and inject the electrolyte into a dry battery cell to obtain a lithium-ion secondary battery.

In the present disclosure, there are no special limitations on the preparation method or material of the separator, the electrolyte, and the negative electrode plate, and the separator, the electrolyte, and the negative electrode plate well-known to those skilled in the art for lithium-ion batteries can be used.

Among them, the negative electrode plate includes a negative electrode current collector and a negative electrode coating layer coated on the negative electrode current collector, where the compaction density of the negative electrode coating layer is $1.3g/cm^3$ to $1.65 g/cm^3$, for example, it could be any value of 1.30, 1.35, 1.4, 1.5, 1.6, 1.65, or any value between $1.3g/cm^3$ to $1.65g/cm^3$. The negative electrode coating layer includes a negative electrode active material, a conductive agent, an adhesive, and a dispersing agent, there are no special limitations on the selection of the type of the negative electrode active material, the conductive agent, the adhesive, and the dispersing agent, and the negative electrode active material is optionally selected from one or more of graphite, soft carbon, hard carbon, mesocarbon microbeads, and a silicon-based material, the current collector is optionally copper foil. A preparation process of the negative electrode plate includes: mix the negative electrode active material, the conductive agent, and the adhesive in a certain ratio, add deionized water and stir to form a uniformly mixed and stable negative electrode slurry, evenly coating the negative electrode slurry on the positive electrode current collector, dry and cold-press to obtain the negative electrode.

In some embodiments, the separator is a material such as polyethylene film, polypropylene film, polyvinylidene fluoride film, and non-woven fabric, etc.

The electrolyte includes a lithium salt and a solvent, and the present disclosure has no special restrictions on the types of the lithium salt and the solvent, and they can be selected according to actual needs, and the lithium salt is optionally $LiPF_6$, LiTFSI, or $LiBF_4$.

The present disclosure also provides an EVTOL, including a lithium-ion battery described above.

The positive electrode plate provided in the present disclosure satisfies the Formula I, and the lithium-ion battery prepared by the positive electrode plate could achieve an excellent DCR performance while ensuring energy density and cycle-life performance simultaneously.

In order to further understand the present disclosure, the positive electrode plate, the preparation thereof, the lithium-ion battery, and EVTOL provided in the present disclosure would be explained below in conjunction with examples, while the scope of protection of the present disclosure is not limited by the following examples.

Example 1

1. A preparation process of the positive electrode plate: a ternary positive electrode active material lithium nickel cobalt manganese oxide (NCM), a conductive agent SP, and an adhesive PVDF were mixed in a certain ratio (where the adhesive accounted for 1.1%, the conductive agent accounted for 3%, and the balance was the ternary positive electrode active material with a mass ratio of the monocrystalline ternary material in the ternary positive electrode active material was 25%), then NMP was added and stirred to form a uniformly mixed and stable positive electrode slurry. The positive electrode slurry was evenly coated on the positive electrode current collector, dried and cold-pressed to obtain a positive electrode plate, with an areal-density of the positive electrode plate being $15g/cm^2$;

2. A preparation process of the negative electrode plate: a negative electrode active material, a conductive agent, and an adhesive were mixed in a certain ratio (where a mass ratio of the negative electrode active material: SP: CNT: PAA: SBR was 95.4%:1.5%:0.1%:2%:1%), then deionized water was added and stirred to form a uniformly mixed and stable negative electrode slurry, the negative electrode slurry was evenly coated on the positive electrode current collector, dried and cold-pressed to obtain the negative electrode plate; the negative electrode active material was a composite material of graphite and silicon oxide with a compaction density of $1.35 g/cm^3$.

3. The separator was polypropylene film.

4. An assembling process of a cell: the positive electrode plate, the separator, the negative electrode plate and the separator were arranged in sequence, and the assembling method was winding.

5. An electrolyte was prepared by dissolving $LiPF_6$ in a mixed solvent of ethylene carbonate, methyl ethyl carbonate and diethyl carbonate with a volume ratio of 1:1:1, with a concentration of 1.2mol/L.

6. The electrolyte was injected into a dry cell, and then subjected to formation and aging, so that the lithium-ion battery was obtained.

Example 2

The lithium-ion battery of Example 2 was prepared according to the preparation method of Example 1 described above, only except that:
During the preparation process of the positive electrode plate, a mass ratio of the monocrystalline ternary material in the ternary positive electrode active material was 10%.

Example 3

The lithium-ion battery of Example 3 was prepared according to the preparation method of Example 1 described above, only except that:
During the preparation process of the positive electrode plate, a mass ratio of the monocrystalline ternary material in the ternary positive electrode active material was 15%.

Example 4

The lithium-ion battery of Example 4 was prepared according to the preparation method of Example 1 described above, only except that:
During the preparation process of the positive electrode plate, a mass ratio of the monocrystalline ternary material in the ternary positive electrode active material was 35%.

Example 5

The lithium-ion battery of Example 5 was prepared according to the preparation method of Example 1 described above, only except that:
During the preparation process of the positive electrode plate, a ratio of the conductive agent was 2.50%.

Example 6

The lithium-ion battery of Example 6 was prepared according to the preparation method of Example 1 described above, only except that:
During the preparation process of the positive electrode plate, a ratio of the conductive agent was 2.60%.

Example 7

The lithium-ion battery of Example 7 was prepared according to the preparation method of Example 1 described above, only except that:
During the preparation process of the positive electrode plate, a ratio of the conductive agent was 3.30%.

Example 8

The lithium-ion battery of Example 8 was prepared according to the preparation method of Example 1 described above, only except that:
During the preparation process of the positive electrode plate, a ratio of the conductive agent was 4.00%.

Example 9

The lithium-ion battery of Example 9 was prepared according to the preparation method of Example 1 described above, only except that:
During the preparation process of the positive electrode plate, an areal-density was 12g/cm$^2$.

Example 10

The lithium-ion battery of Example 10 was prepared according to the preparation method of Example 1 described above, only except that:
During the preparation process of the positive electrode plate, an areal-density was 14g/cm$^2$.

Example 11

The lithium-ion battery of Example 11 was prepared according to the preparation method of Example 1 described above, only except that:
During the preparation process of the positive electrode plate, the areal-density was 16g/cm$^2$.

Example 12

The lithium-ion battery of Example 12 was prepared according to the preparation method of Example 1 described above, only except that:
During the preparation process of the positive electrode plate, an areal-density was 18g/cm$^2$.

Comparative example 1

The lithium-ion battery of Comparative example 1 was prepared according to the preparation method of Example 1 described above, only except that:
During the preparation process of the positive electrode plate, a mass ratio of the monocrystalline ternary material in the ternary positive electrode active material was 5%.

Comparative example 2

The lithium-ion battery of Comparative example 2 was prepared according to the preparation method of Example 1 described above, only except that:
During the preparation process of the positive electrode plate, a mass ratio of the monocrystalline ternary material in the ternary positive electrode active material was 50%.

Comparative example 3

The lithium-ion battery of Comparative example 3 was prepared according to the preparation method of Example 1 described above, only except that:
During the preparation process of the positive electrode plate, a mass ratio of the monocrystalline ternary material in the ternary positive electrode active material was 75%.

Comparative example 4

The lithium-ion battery of Comparative example 4 was prepared according to the preparation method of Example 1 described above, only except that:
During the preparation process of the positive electrode plate, a ratio of the conductive agent was 1.50%.

Comparative example 5

The lithium-ion battery of Comparative example 5 was prepared according to the preparation method of Example 1 described above, only except that:
During the preparation process of the positive electrode plate, a ratio of the conductive agent was 4.50%.

Comparative example 6

The lithium-ion battery of Comparative example 6 was prepared according to the preparation method of Example 1 described above, only except that:
During the preparation process of the positive electrode plate, an areal-density was $10g/cm^2$.

Comparative example 7

The lithium-ion battery of Comparative example 7 was prepared according to the preparation method of Example 1 described above, only except that:
During the preparation process of the positive electrode plate, an areal-density was $20g/cm^2$.

Performance testing was conducted on the prepared lithium-ion batteries, and the results are shown in Table 1.

Table 1

| | Mass ratio of the monocrystalline ternary material in the active material | Ratio of the conductive agent | Areal-density, $g/cm^2$ | $10^6ab^2/c^2$ | Energy density, Wh/Kg | Cycle-life performance (Number of cycles) | DCR, $m\Omega$ |
|---|---|---|---|---|---|---|---|
| Example 1 | 25% | 3.00% | 15 | 1.00 | 254 | 1200 | 1.12 |
| Example 2 | 10% | 3.00% | 15 | 0.40 | 259 | 940 | 1.04 |
| Example 3 | 15% | 3.00% | 15 | 0.60 | 257 | 1020 | 1.07 |
| Example 4 | 35% | 3.00% | 15 | 1.40 | 251 | 1260 | 1.18 |
| Example 5 | 25% | 2.50% | 15 | 0.69 | 255 | 1100 | 1.23 |
| Example 6 | 25% | 2.60% | 15 | 0.75 | 255 | 1170 | 1.18 |
| Example 7 | 25% | 3.30% | 15 | 1.21 | 252 | 1250 | 1.06 |
| Example 8 | 25% | 4.00% | 15 | 1.78 | 250 | 1260 | 1.01 |
| Example 9 | 25% | 3.00% | 12 | 1.56 | 244 | 1260 | 1.05 |
| Example 10 | 25% | 3.00% | 14 | 1.15 | 251 | 1240 | 1.09 |
| Example 11 | 25% | 3.00% | 16 | 0.88 | 256 | 1160 | 1.16 |
| Example 12 | 25% | 3.00% | 18 | 0.69 | 259 | 1100 | 1.28 |
| Comparative example 1 | 5% | 3.00% | 15 | 0.20 | 261 | 860 | 1.02 |
| Comparative example 2 | 50% | 3.00% | 15 | 2.00 | 245 | 1310 | 1.26 |
| Comparative example 3 | 75% | 3.00% | 15 | 3.00 | 245 | 1360 | 1.35 |
| Comparative example 4 | 25% | 1.50% | 15 | 0.25 | 257 | 980 | 1.36 |
| Comparative example 5 | 25% | 4.50% | 15 | 2.25 | 248 | 1290 | 0.98 |
| Comparative example 6 | 25% | 3.00% | 10 | 2.25 | 236 | 1280 | 1.02 |

(continued)

| | Mass ratio of the monocrystalline ternary material in the active material | Ratio of the conductive agent | Areal-density, g/cm$^2$ | $10^6ab^2/c^2$ | Energy density, Wh/Kg | Cycle-life performance (Number of cycles) | DCR, mΩ |
|---|---|---|---|---|---|---|---|
| Comparative example 7 | 25% | 3.00% | 20 | 0.56 | 263 | 1050 | 1.38 |

Cycle-life performance testing process: at a temperature of 25°C, the battery was first charged at a constant current of 1C to 4.25V, then charged at a constant voltage of 4.25V until the current I was ≤0.05C, it was stood for 30min, then discharged at a constant current of 1C to 2.5V, stood for 30min again to obtain the initial discharge capacity at 1C of the battery, denoted as C0; the above steps were repeated until the discharge capacity faded to 80% of the initial discharge capacity C0, and the number of cycles was recorded.

The lithium-ion secondary batteries prepared in Examples 1 to 12 and Comparative examples 1 to 7 were subjected to energy density testing and DCR testing. The energy density testing process was as follows: it was charged to 4.25V at a constant current of 1C and a constant voltage at a temperature of 25°C, with a cut-off current of 0.05C. Then it was discharged at 1C to 2.5V. Energy density=discharge energy/mass of battery cell.

DCR testing process: the battery was adjusted to 50% SOC at a temperature of 25°C, it was stood for 1h, and discharged at a constant current of 2C for 30s, the DCR=difference in voltages before and after discharge/discharge current.

It could be seen from Table 1 that in Example 1, the mass ratio of the monocrystalline ternary material, the ratio of the conductive agent, the areal-density, and $10^6ab^2/c^2$ in the active material were all within the range specified in the present disclosure, and the resulting battery had an excellent energy density, cycle-life performance, and DCR. In Examples 1 to 4 and Comparative examples 1 to 2, the influences of the mass ratio of the monocrystalline ternary material in the ternary material on the performance of the battery were compared, and Examples 1 to 4 and Comparative examples 1 to 2 represented the increasing mass ratios of the monocrystalline ternary material in the positive electrode active material. As the ratio of monocrystalline ternary material in the ternary material increased, the energy density of the battery continuously decreased, and the DCR of the battery gradually increased, but the cycle performance of the battery was continuously improved. Comparative example 1 did not satisfy $0.39<10^6ab^2/c^2<2$, and the mass ratio of monocrystalline ternary material in the active material was relatively low, resulting in an excellent energy density and power performance of the resulting battery, but the cycle-life performance of which was poor. Comparative example 2 did not satisfy $0.39<10^6ab2/c^2<2$, resulting in a good cycle performance of the resulting battery, but the energy density of which was low, especially the power performance deteriorated significantly. Comparative example 3 did not satisfy $0.39<10^6ab^2/c^2<2$, and the mass ratio of the monocrystalline ternary material in the active material was relatively high, resulting in a good cycle performance of the battery, but the energy density of which was low and the power performance deteriorated significantly. Examples 2 to 4 satisfied $0.39<10^6ab^2/c^2<2$ the condition and showed comprehensive performance in all aspects, meanwhile.

In Examples 5 to 8 and Comparative examples 4 to 5, the influences of the content of conductive agent in the positive electrode plate on the performance of the battery were compared. In Examples 5 to 8 and Comparative examples 4 to 5, the ratio of the conductive agent gradually increased, the cycle performance gradually increased, and the DCR continuously decreased. However, it was found that further increasing the amount of the conductive agent when the amount of the conductive agent was at a certain level could not continuously improve the cycle performance and decrease the DCR of the battery. Among them, when Examples 5 to 8 satisfied $0.39<10^6ab^2/c^2<2$ and the mass ratio of the monocrystalline ternary material, the ratio of the conductive agent, and the areal-density in the active material all satisfied the range requirements, the performance of the battery exhibited an excellent comprehensive performance.

In Examples 9 to 12 and Comparative examples 6 to 7, the influences of the areal-density of the positive electrode plate on the performance of the battery were compared. In Examples 9 to 12 and Comparative examples 6 to 7, both areal-density and energy density gradually increased, but power performance and cycle performance continuously decreased. In Comparative example 6, the areal-density was too low, resulting in an excellent cycle performance and power performance, but the energy density was too low. In Comparative example 7, the areal-density was too high, resulting in a poor cycle performance. Among them, Examples 9 to 12 satisfied $0.39<10^6ab2/c^2<2$, and the mass ratio of the monocrystalline ternary material, the ratio of conductive agent, and the areal-density in the active material all satisfied the range requirements, the performance of the battery exhibited an excellent comprehensive performance.

According to the analysis of the above Examples, when the mass ratio of the monocrystalline ternary material of positive electrode active material, the content of the conductive agent, and the areal-density satisfy $0.39<10^6ab2/c^2<2$, and a, b, and c satisfy $10\%<a<50\%$, $2.5\%\leq b\leq4\%$, and $12mg/cm^2\leq c\leq18mg/cm^2$, respectively, the battery had an excellent comprehensive performance.

**Claims**

1. A positive electrode plate, comprising a positive electrode current collector and a coating layer coated on at least one surface of the positive electrode current collector perpendicular to a thickness direction, wherein the coating layer comprising a positive electrode active material and a conductive agent, and the positive electrode active material comprising a monocrystalline ternary material and a polycrystalline ternary material, the coating layer satisfies Formula I:

$$0.39 < 10^6 ab^2/c^2 < 2, \text{ Formula I};$$

   where in Formula I, a is a mass ratio of the monocrystalline ternary material in the positive electrode active material, b is a mass percentage content of the conductive agent in the coating layer, and c is an areal-density of the coating layer in $mg/cm^2$.

2. The positive electrode plate according to claim 1, wherein a value range of $10^6 ab^2/c^2$ is 0.59 to 1.41.

3. The positive electrode plate according to claim 1, wherein $10\% \leq a \leq 50\%$, and preferably $15\% \leq a \leq 35\%$.

4. The positive electrode plate according to claim 1, wherein $2.5\% \leq b \leq 4\%$, and preferably $2.6\% \leq b \leq 3.3\%$.

5. The positive electrode plate according to claim 1, wherein $12mg/cm^2 \leq c \leq 18mg/cm^2$, and preferably $14mg/cm^2 \leq c \leq 16mg/cm^2$.

6. The positive electrode plate according to claim 1, wherein the positive electrode active material is selected from one or two of lithium nickel cobalt manganese oxide and lithium nickel cobalt aluminum oxide; and
   the positive electrode current collector is aluminum foil or carbon coated aluminum foil.

7. The positive electrode plate according to claim 1, wherein a thickness of the coating layer is $65\mu m$ to $120\mu m$.

8. A lithium-ion battery, comprising a positive electrode plate , a negative electrode plate , a separator and an electrolyte, wherein the positive electrode plate is selected from the positive electrode plate according to any one of claims 1 to 6.

9. The lithium-ion battery according to claim 8, wherein the negative electrode plate comprises a negative electrode current collector and a negative electrode coating layer coated on the negative electrode current collector, wherein a compaction density of the negative electrode coating layer is $1.3g/cm^3$ to $1.65g/cm^3$;
   the negative electrode coating layer comprising a negative electrode active material, which is selected from one or more of graphite, soft carbon, hard carbon, mesocarbon microbeads, and a silicon-based material.

10. An electrical device, comprising the lithium-ion battery according to claim 9. +

Europäisches Patentamt

European Patent Office

Office européen des brevets

# EUROPEAN SEARCH REPORT

**Application Number**

EP 24 20 4648

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 632 164 A (UNIV SOUTH CHINA NORMAL) 22 August 2023 (2023-08-22) * example 1 * * "Content of the invention" * ----- | 1-10 | INV. H01M4/04 H01M4/36 H01M4/48 H01M4/505 |
| X | CN 116 504 922 A (WEILAI BATTERY TECH ANHUI CO LTD) 28 July 2023 (2023-07-28) * claims 5,6,9 * * "Electrochemical Device" * ----- | 1-10 | H01M4/525 H01M4/62 H01M10/0525 H01M4/02 |
| X | CN 116 053 408 A (XIAMEN HAICHEN ENERGY STORAGE TECH CO LTD) 2 May 2023 (2023-05-02) * "Detailed ways" * * example 1 * ----- | 1-10 | |
| X | CN 112 151 794 A (ZHUHAI COSMX BATTERY CO LTD) 29 December 2020 (2020-12-29) * claims 5,8 * * "Summary of the Invention" * * table 1 * ----- | 1-10 | |

**TECHNICAL FIELDS SEARCHED (IPC)**

H01M

The present search report has been drawn up for all claims

| Place of search | Date of completion of the search | Examiner |
|---|---|---|
| Munich | 25 February 2025 | Galbiati, Ivano |

EPO FORM 1503 03.82 (P04C01)

## ANNEX TO THE EUROPEAN SEARCH REPORT
## ON EUROPEAN PATENT APPLICATION NO.

EP 24 20 4648

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2025

| Patent document cited in search report | | Publication date | Patent family member(s) | Publication date |
|---|---|---|---|---|
| CN 116632164 | A | 22-08-2023 | NONE | |
| CN 116504922 | A | 28-07-2023 | NONE | |
| CN 116053408 | A | 02-05-2023 | NONE | |
| CN 112151794 | A | 29-12-2020 | NONE | |

EPO FORM P0459

For more details about this annex : see Official Journal of the European Patent Office, No. 12/82